# EUROPEAN PATENT APPLICATION

(11) **EP 4 574 489 A1**
(43) Date of publication of application: **25.06.2025**
(21) Application number: 23219211.2
(22) Date of filing: 21.12.2023
(51) Int. Cl.: B60K 1/04

(54) **A VEHICLE FRAME SUPPORT**

(71) Applicant: VOLVO TRUCK CORPORATION, 405 08 Göteborg (SE)
(72) Inventor: RAGOT, Sebastien, 413 11 GÖTEBORG (SE); SELBACH, Guilherme, GREENSBORO, 27410 (US); HÖRDER, Jonatan, 431 34 MÖLNDAL (SE)
(74) Representative: Kransell & Wennborg KB

(57) **Abstract**

The present disclosure relates to a vehicle frame support configured to support an energy storage system, comprising a first portion comprising a first surface, the first surface comprising at least one aperture in which a fastener element is connectable to connect the first portion to a frame of a vehicle, a second portion comprising a first and a second abutment surface configured to be in abutment with a support bracket of the energy storage system to support the energy storage system, wherein the first and second abutment surfaces face away from each other relative to a first geometric axis of the vehicle frame support, and wherein the first and second abutment surfaces face away from the first surface relative to a second geometric axis of the vehicle frame support.

## Description

### TECHNICAL FIELD

The disclosure relates generally to suspension of energy storage systems. In particular aspects, the disclosure relates to a vehicle frame support. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage systems, often in the form of traction batteries, need to be relatively large in size to be able to contain a sufficient level of energy such that the vehicle can be operated at an acceptable range using the electric traction motors. The large energy storage systems are in turn of substantial weight, and there is a challenged to position and assemble these energy storage systems to the frame of the heavy duty vehicle.

### SUMMARY

According to a first aspect of the disclosure, there is provided a vehicle frame support configured to support an energy storage system, the vehicle frame support comprising a first portion comprising a first surface, the first surface comprising at least one aperture in which a fastener element is connectable to connect the first portion to a frame of a vehicle, a second portion comprising a first abutment surface extending in a first slanted plane, and a second abutment surface extending in a second slanted plane, the first and second abutment surfaces being configured to be in abutment with a support bracket of the energy storage system to support the energy storage system, the first and second abutment surfaces face away from each other relative to a first geometric axis of the vehicle frame support, and wherein the first and second abutment surfaces face away from the first surface relative to a second geometric axis of the vehicle frame support.

The first aspect of the disclosure may seek to solve the problem of difficult and time consuming installation of energy storage systems to the frame of a vehicle. A technical benefit may include that the installation process of an energy storage system to the frame of the vehicle can be simplified and more efficient. Also, the vehicle frame support may additionally provide for a compact support of the energy storage system when connected to the frame, which vehicle frame support can be designed to withstand the relatively large load from the energy storage system.

In particular, by designing the vehicle frame support with first and second abutment surfaces as described above, a self-centering adjustment of the energy storage system can be obtained when the energy storage system is mounted to the vehicle frame support arranged on the vehicle frame. In detail, the slanted plane of the first and second abutment surfaces, where the first and second abutment surfaces face away from each other relative to the first geometric axis, as well as facing away from the first surface of the first portion, may not require that the energy storage system is connected at its intended position at a first instance of the installation process, i.e. when e.g. guiding the energy storage system transversely onto the frame connected vehicle frame support. On the contrary, the energy storage system can be connected at an approximately correct position, i.e. the energy storage system can be slightly displaced in a longitudinal direction as well as a vertical direction of the vehicle frame. The energy storage system can subsequently slide into its correct and intended position in a self-centered manner by means of the slanted planes of the abutment surfaces. Hence, the self-centering of the energy storage system can preferably be obtained by the slanted planes in combination with the eigen weight of the energy storage system.

The vehicle frame support may thus be advantageously pre-assembled to the frame of the vehicle before suspending the energy storage system to the vehicle frame support and the vehicle frame. Also, the slanted planes of the first and second abutment surfaces may additionally enable for improved load distribution as will be described in further detail below.

The slanted planes should be construed as non-parallel with the first surface of the first portion as well as non-parallel with a protruding direction of the second portion. Hence, when the vehicle frame support is connected to the frame of the vehicle, the slanted planes extend in a direction which is non-parallel to the vertical direction of the vehicle as well as non-parallel to the ground surface. The slanted planes are thus, in a connected state to the vehicle frame, angled downwards relative to a transversal direction of the vehicle, as well as angled downwards relative to a longitudinal direction of the vehicle. Further, and as will be evident from the below description, the definition "face away" may advantageously mean that a component of a surface face away from a component of another surface.

Optionally in some examples, including in at least one preferred example, the first and second abutment surfaces are non-parallel with the first surface.

Optionally in some examples, including in at least one preferred example, the first abutment surface is a first planar abutment surface and the second abutment surface is a second planar abutment surface. A technical benefit may include that the self-centering of the energy storage system may be even further improved and the installation process further simplified. In particular, the planar abutment surfaces may enable for improved sliding of the energy storage system to its correct and intended position.

Optionally in some examples, including in at least one preferred example, the first and second geometric axes are perpendicular to each other.

Optionally in some examples, including in at least one preferred example, the first geometric axis is parallel with the first surface.

Optionally in some examples, including in at least one preferred example, the first surface extends along an X-direction and a Z-direction of a cartesian coordinate system of the vehicle frame support, the second portion protruding at least in a Y-direction of the cartesian coordinate system.

Optionally in some examples, including in at least one preferred example, a normal vector of the first abutment surface is non-parallel with a normal vector of the second abutment surface.

Optionally in some examples, including in at least one preferred example, an X-component of the normal vector of the first abutment surface is directed away from an X-component of the normal vector of the second abutment surface.

Optionally in some examples, including in at least one preferred example, a Y-component of the normal vector of the first abutment surface and a Y-component of the normal vector of the second abutment surface are directed away from a normal vector of the first surface.

Optionally in some examples, including in at least one preferred example, a Z-component of the normal vector of the first abutment surface and a Z-component of the normal vector of the second abutment surface are configured to be directed upwards when the first portion is connected to a frame of a vehicle.

Optionally in some examples, including in at least one preferred example, the second portion at least partly enclosing the first portion. A technical benefit may include that the first and second portions can be made from different materials.

Optionally in some examples, including in at least one preferred example, the first and second portions are made from different materials. However, the first and second portions may alternatively be made from the same material. In the latter example, the first and second portions may be formed as a single component.

Optionally in some examples, including in at least one preferred example, the first portion is of a metal material and the second portion is of a rubber material. A technical benefit may include that vibration damping during operation of the vehicle, at which the energy storage system is mounted, can be reduced.

Optionally in some examples, including in at least one preferred example, the second portion comprises a recess portion arranged between the first and second abutment surfaces. A technical benefit may include improved access for a tool to connect the vehicle frame support to the frame of the vehicle may be provided.

According to a second aspect, there is provided a kit of parts, comprising a vehicle frame support according to any one of the above described examples in relation to the first aspect, and a support bracket connectable to an energy storage system.

Optionally in some examples, including in at least one preferred example, the support bracket comprises a first bracket surface and a second bracket surface, wherein the first bracket surface is arranged in abutment with the first abutment surface and the second bracket surface is arranged in abutment with the second abutment surface when the support bracket is supported by the vehicle frame support. A technical benefit may include that the energy storage system may be connected to the frame of the vehicle, via the kit of parts, in a reliable manner.

Effects and features of the second aspect are largely analogous to those described above in relation to the first aspect.

According to a third aspect, there is provided a vehicle comprising a frame, the frame extends along a longitudinal direction of the vehicle, the vehicle further comprises a vehicle frame support of any one of the above described examples in relation to the first aspect, the vehicle frame support being connected to a first frame member of the vehicle frame.

Optionally in some examples, including in at least one preferred example, the frame comprises a second frame member, the first and second frame members being arranged in parallel with each other along the longitudinal direction, wherein the vehicle further comprises a vehicle frame support of any one the above described examples in relation to the first aspect connected to the second frame member.

Optionally in some examples, including in at least one preferred example, further comprising a first energy storage system supported by the frame support connected to the first frame member, and a second energy storage system supported by the frame support connected to the second frame member.

Optionally in some examples, including in at least one preferred example, the first and second energy storage modules are connected to each other.

Further effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary exploded view of an energy storage system connected to a frame of the vehicle according to an example,
Fig. 3 is an exemplary view of an energy storage module of the energy storage system in Fig. 2 according to an example, and
Figs. 4A - 4C illustrate different views of a vehicle frame support according to an example.

### DETAILED DESCRIPTION

The detailed description set forth below provides information and examples of the disclosed technology with sufficient detail to enable those skilled in the art to practice the disclosure.

The following disclosure aims at providing a vehicle frame support that simplifies the installation of an energy storage system to a vehicle frame of a vehicle. Thus, a technical benefit may include that the installation process of an energy storage system to the frame of the vehicle can be simplified and more efficient. Also, the vehicle frame support may additionally provide for a compact support of the energy storage system when connected to the frame, which vehicle frame support can be designed to withstand the relatively large load from the energy storage system.

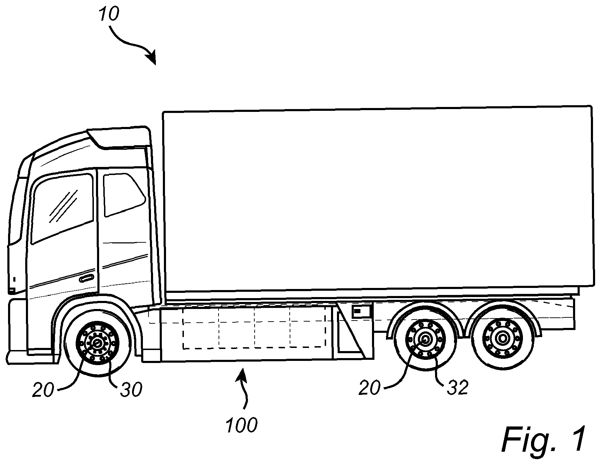

Turning to Fig. 1, which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft (not shown). The at least one electric traction motor 20 is configured to apply propulsive power to the wheels of the vehicle during propulsion, and to generate electric power during braking.

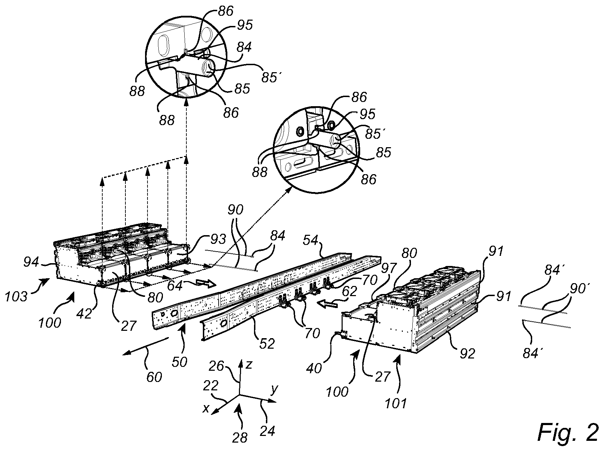

The vehicle further comprises an energy storage system 100, also referred to as a high-voltage vehicle battery. The energy storage system 100 is configured to feed electric power to the electric traction motor 20 during propulsion of the vehicle 10 and to receive electric power during braking. In order to describe the connection of the energy storage system 100 to the frame of the vehicle 10, reference is now made to Fig. 2.

Fig. 2 is an exemplary exploded view illustrating the energy storage systems 100 connected to the frame 50 of the vehicle 10 according to an example. In particular, a first energy storage system 101 is arranged at a first lateral side of the frame 50, and a second energy storage system 103 is arranged at a second lateral side of the frame 50. The exemplified frame 50 comprises a pair of longitudinal frame members 52, 54. Put it differently, the frame 50 comprises a first frame member 52 and a second frame member 54, wherein each of the first 52 and second 54 frame members extends in the longitudinal direction 60 of the vehicle 10. Thus, the first energy storage system 101 is connected to the first frame member 52 and the second energy storage system 103 is connected to the second frame member 54. Further, a plurality of vehicle frame supports 70 are connected to each of the first 52 and second 54 frame members. Also, each of the first 101 and second 103 energy storage systems comprises a respective support bracket 80. The longitudinal distance between the plurality of vehicle frame supports 70 is substantially the same as the corresponding longitudinal distance between the support brackets 80 of the first 101 and second 103 energy storage systems. The vehicle frame supports will be described in further detail below.

When connecting the first 101 and second 103 energy storage systems to the frame 50, the first energy storage system 101, in Fig. 2 illustrated as comprising four first energy storage modules 27, is moved laterally in a first direction 62 towards the first frame member 52, and the second energy storage system 103, in Fig. 2 illustrated as comprising four second energy storage modules 27, is moved laterally in a second direction 64 towards the second frame member 54. The first 101 and second 103 energy storage systems are connected to the frame 50 by arranging each of the support brackets 80 in abutment with a corresponding vehicle frame support 70 of the first 52 and second 54 frame members. In the exemplified illustration, each of the energy storage modules 27 of the corresponding first 101 and second 203 energy storage system comprises a support brackets 80 for connecting to a corresponding vehicle frame support 70.

Before arranging each of the support brackets 80 in abutment with the corresponding vehicle frame support 70, a plurality of first set of bars 90, of which only two bars are depicted in Fig. 2, is guided laterally through a respective hole 95 in the second energy storage system 103 from a laterally inner side 93 to a laterally outer side 94 of the second energy storage system 103. Each bar of the first set of the bars 90 is rotationally connected to a threaded sleeve 84, i.e. threaded to internal threads 85 of the threaded sleeve 84. The threaded sleeves 84 are rotationally fixed in the hole 95 at the laterally inner side 93. The exemplified threaded sleeves 84 comprises a pair of radially protruding portions 86 arranged in a corresponding recess 88 of the hole 95 to prevent the threaded sleeves 84 from rotating. Other means for preventing rotation are also conceivable, such as e.g. a threaded sleeve in the form of a hexagonal nut arranged in a corresponding hexagonal portion of the hole 95, etc. When the first set of bars 90 is arranged laterally through the second energy storage system 103, the bars of the first set of bars 90 can be fixated at the laterally outer side 94 of the second energy storage system 103 by e.g. a nut (not shown) tightening the bars.

Thereafter, a second set of bars 90', of which only two bars are depicted in Fig. 2, is guided laterally through a respective hole 91 in the first energy storage system 101 from a laterally outer side 92 to a laterally inner side 97 of the first energy storage system 101. Each bar of the second set of bars 90' comprises a threaded portion 84'. The threaded portion 84' of the second set of bars 90' is, after the bars are guided laterally through the holes 91 in the first energy storage system 101, threaded to a second set of the internal threads 85' of the threaded sleeve 84. Hereby, the first set of bars 90 is connected to the second set of bars 90' via the threaded sleeves 84. When the second set of bars 90' is connected to the sleeves 84, the bars 90' can be fixated at the laterally outer side 91 of the first energy storage system 101 by e.g. a nut (not shown) tightening the bars.

The energy storage system 100 may also comprise a plurality of guiding pins 40. The exemplified guiding pin 40 in Fig. 2 are arranged at the laterally inner side 97 of the first energy storage system 101 and extend towards the second energy storage system 103. The second energy storage system 103 may comprise a corresponding plurality of guiding apertures 42 arranged at the laterally inner side 93 of the second energy storage system 103. When connecting the first 101 and second energy storage systems to each other, the guiding pins 40 can assist the operator to correctly position the first energy storage system 101 relative to the second energy storage system 103 before guiding the second set of bars 90' laterally through the holes 91 of the first energy storage system 101.

Fig. 2 further illustrates a cartesian coordinate system 28 of the energy storage system 100 when connected to the frame 50 of the vehicle 10. The X-axis 22 corresponds to the longitudinal direction of the vehicle 10, directed in a forward driving direction. The Y-axis 24 corresponds to the lateral or transversal direction of the vehicle 10, while the Z-axis 26 corresponds to the vertical direction, directed in an upward direction of the vehicle 10. The cartesian coordinate system 28 is thus defined in a right orthonormal system.

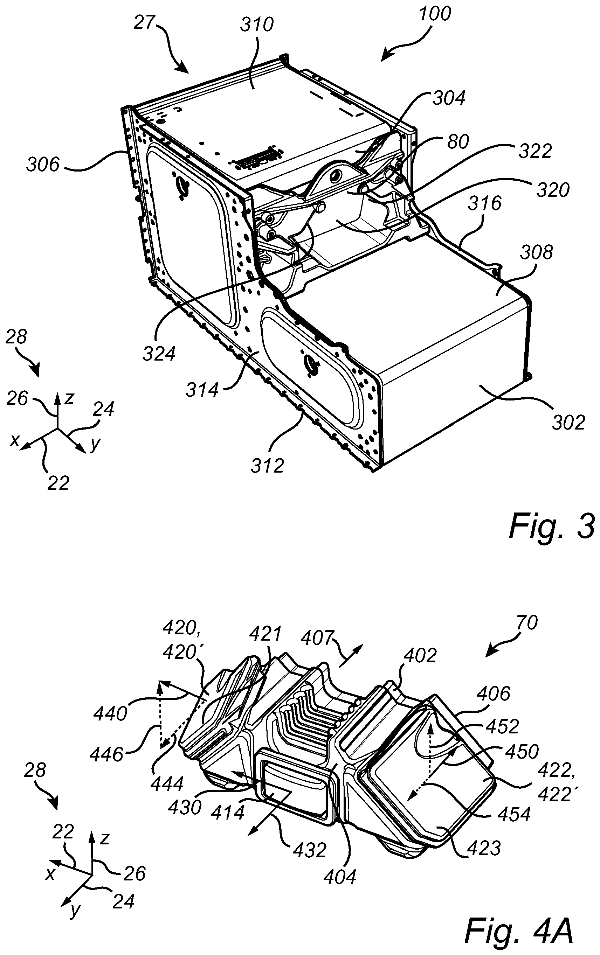

In order to describe one of the energy storage modules 27 in further detail, reference is now made to Fig. 3, which is an exemplary view of the energy storage module 27 of the energy storage system 100 in Fig. 2 according to an example. The exemplified energy storage module 27 comprises a first inner surface 302 extending in a plane spanning in the longitudinal and vertical directions, i.e. in the directions of the X-axis 22 and the Z-axis 26. The first inner surface 302 is, when the energy storage module 27 is connected to the frame 50, arranged vertically below the frame and faces a corresponding first inner surface of an energy storage module arranged at the other side of the frame 50 in the lateral direction. The first inner surface 302 is thus a first laterally innermost surface. The exemplified energy storage modules 27 also comprises a second inner surface 304. In a similar vein as the first inner surface 302, also the second inner surface 304 extends in a plane spanning in the longitudinal and vertical directions, i.e. in the directions of the X-axis 22 and the Z-axis 26. The second inner surface 304 is facing the frame 50 when the energy storage module 27 is connected to the frame 50. Further, the exemplified energy storage modules 27 comprises an outer surface 306. In a similar vein as the first 302 and second 304 inner surfaces, also the outer surface 306 extends in a plane spanning in the longitudinal and vertical directions, i.e. in the directions of the X-axis 22 and the Z-axis 26. The outer surface 306 is facing away from the frame 50 when the energy storage module 27 is connected to the frame 50 and is thus a laterally outer surface. In the example depicted in Fig. 3, the first 302 and second 304 inner surfaces as well as the outer surface 306 are arranged parallel with each other.

The exemplified energy storage module 27 further comprises a first upper surface 308. The first upper surface 308 extends in a plane spanning in the longitudinal and lateral directions, i.e. in the directions of the X-axis 22 and the Y-axis 24. The first upper surface 308 extends in the lateral direction from the first inner surface 302 to the second inner surface 304. The first upper surface 306 is, when the energy storage module 27 is connected to the frame 50, arranged vertically below the frame 50 and faces at least partly a lower surface of the frame. The exemplified energy storage module 27 also comprises a second upper surface 310. The second upper surface 310 extends in a plane spanning in the longitudinal and lateral directions, i.e. in the directions of the X-axis 22 and the Y-axis 24. The second upper surface 310 extends in the lateral direction from the second inner surface 304 to the outer surface 306. The second upper surface 308 is arranged vertically above the first upper surface 308. Also, the exemplified energy storage module 27 comprises a lower surface 312. The lower surface 312 extends in a plane spanning in the longitudinal and lateral directions, i.e. in the directions of the X-axis 22 and the Y-axis 24. The lower surface 312 extends in the lateral direction from the first inner surface 302 to the second inner surface 304. The lower surface 310, when the energy storage module 27 is connected to the frame 50, facing a ground surface. In the example depicted in Fig. 3, the first 308 and second 310 upper surfaces as well as the lower surface 312 are arranged parallel with each other.

Moreover, the exemplified energy storage module 27 comprises a first side surface 314 and a second side surface 316. Each of the first 314 and second 316 side surfaces extends in a plane spanning in the lateral and vertical directions, i.e. in the directions of the Y-axis 24 and the Z-axis 26. Each of the above described first inner surface 302, second inner surface 304, the outer surface 306, the first upper surface 308, the second outer surface 310 and the lower surface 312 extends between the first 314 and second 316 side surfaces. The exemplified energy storage module 27 is thus arranged in an L-shaped configuration as seen in the longitudinal direction, i.e. in the direction of the X-axis 22.

Moreover, the energy storage module 27 comprises the above mentioned support bracket 80. In further detail, the support bracket 80 is exemplified as arranged on the second inner surface 304 of the energy storage module 27. As will be evident from the below description, the support bracket 80 is configured to connect to the vehicle frame support 70 briefly discussed above. The support bracket 80 may be an integrated portion of the second inner surface 304 or arranged as an external component connected to the second inner surface 304. Such external component may, e.g. be connected to the second inner surface 304 by a suitable fastening element such as e.g. a screw connection, welded, etc.

The support bracket 80 comprises a recessed portion 320. The recessed portion 320 extends in the direction of the Y-axis 24. More specifically, the recessed portion 320 extends in the direction towards the outer surface 306 of the energy storage module 27. Further, the support bracket 80 comprises a first bracket surface 322 and a second bracket surface 324. Each of the first 322 and second 324 bracket surfaces may advantageously form part of the recessed portion 320. The first 322 and second 324 bracket surfaces preferably extends in the direction towards the outer surface 306. Further, each of the first 322 and second 324 bracket surfaces faces in a vertically downward direction as well as in a longitudinal direction. Put it differently, the first 322 and second 324 bracket surfaces each has a component in a vertical downward direction, i.e. in a downward direction of the Z-axis. Each of the first 322 and second 324 bracket surfaces also has a component in a longitudinal direction, i.e. in a direction of the X-axis. The components in the direction of the X-axis may face each other. Preferably, the first 322 and second 324 bracket surfaces may also have a component in the lateral direction, i.e. in a direction of the Y-axis.

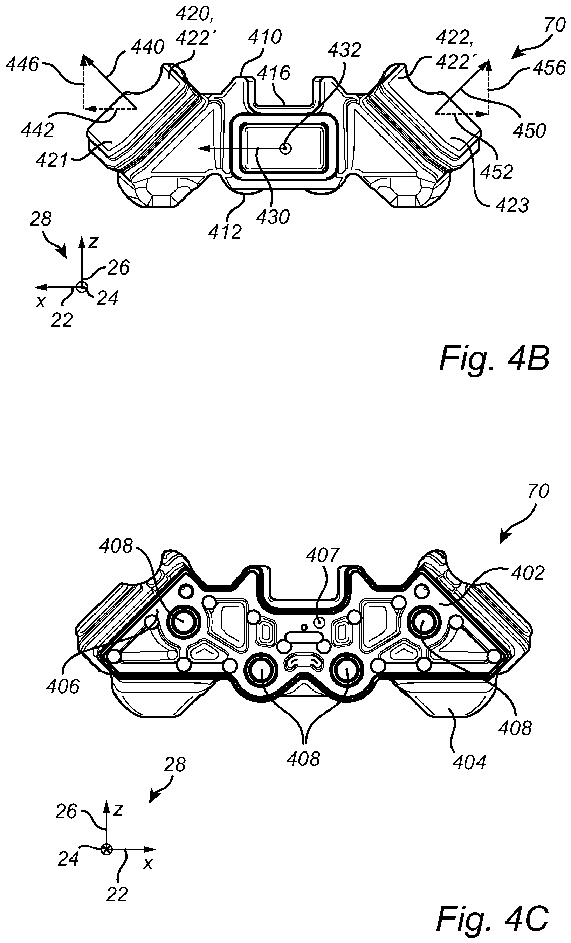

In order to describe the above indicated vehicle frame support 70 in further detail, reference is now made to Figs. 4A - 4C, which illustrate different views of the vehicle frame support 70 according to an example. In particular, Fig. 4A is an exemplary front view of the vehicle frame support 70, i.e. seen in front when connected to the frame 50. Fig. 4B is an exemplary perspective view of the vehicle frame support 70, and Fig. 4C is an exemplary rear view of the vehicle frame support 70, i.e. seen from the frame 50 when connected thereto.

As can be seen in Figs. 4A - 4C, the vehicle frame support 70 comprises a first portion 402 and a second portion 404. As can be best seen in Fig. 4C, the first portion 402 comprises a first surface 406. The first surface 406 is arranged to face the frame 50 of the vehicle 10 when connected thereto. The first surface 406 may extend in a plane spanning in the directions of the X- and Z-axes of the cartesian coordinate system 28. Further, the first surface 406 comprises at least one aperture 408, in Fig. 4C exemplified as four apertures. The vehicle frame support 70 is configured to be connected to the frame 50 by fastener elements connecting the first surface 406 to the frame 50. In detail, the fastener elements may preferably be arranged through the frame 50, or through a bracket connected to the frame 50, and fixated in the apertures 408 to securely connect the vehicle frame support 70 to the frame 50. The apertures 408 may preferably be provided with internal threads and the fastener elements may preferably be screws threaded in the threaded apertures 408. The fastener elements may alternatively be bolts, rivets or welding joints. Further, the first portion 402 may preferably be made from a metallic material.

The second portion 404 of the vehicle frame support 70 may preferably at least partly enclose the first portion 402. The second portion 404 may protrude in a direction from the first surface 406 of the first portion. The protruding direction of the second portion 404 is thus in the direction away from the frame 50 when the vehicle frame support 70 is attached to the frame 50 at the first surface 406. In a similar vein, the first portion 402 may also be arranged as a protruding portion, which also protrudes in the direction from the first surface 406. In detail, the second portion 404 protrudes from the first surface 406 of the first portion 402 in the lateral direction, i.e. in the direction of the Y-axis 24 of the cartesian coordinate system 28. The second portion 404 comprises an upper surface 410 and a lower surface 412, which upper 410 and lower 412 surfaces are arranged on opposite vertical ends of the vehicle frame support 70. The second portion 404 also comprises a front surface 414 arranged at a laterally opposite side of the vehicle frame support 70 compared to the first surface 406 of the first portion 402. The front surface 414 and the first surface 406 thus face away from each other. The second portion 404 may preferably be made from a material with increased damping characteristics compared to the material of the first portion 402. Preferably, the material of the second portion may be a rubber based material.

The second portion 404 further comprises a first abutment surface 420 and a second abutment surface 422. As can be seen in Figs. 4A and 4B, the first abutment surface 420 extends in a first slanted plane 421 and the second abutment surface 422 extends in a second slanted plane 423. Each of the first 420 and second 422 abutment surfaces may advantageously be respective first and second planar abutment surfaces. Further, the second portion 404 may also comprise a recess portion 416 arranged between the first 420 and second 422 abutment surfaces. In detail, the exemplified recess portion 416 is recessed in the vertical direction, i.e. in the downward direction of the Z-axis 26, and positioned longitudinally between the first 420 and second 422 abutment surfaces, i.e. between the first 420 and second 422 abutment surfaces in the direction of the X-axis 22.

As can be seen in e.g. Figs. 4A and 4B, the first 420 and second 422 abutment surfaces face away from each other relative to a first geometric axis 430 of the vehicle frame support 70. The first geometric axis 430 may preferably be parallel with the first surface 406 of the first portion 402, and thus also preferably parallel with the with the Y-axis 24. The first 420 and second 422 abutment surfaces also face away from the above described first surface 406 of the first portion 402 relative to a second geometric axis 432 of the vehicle frame support 70. The second geometric axis 432 may preferably be parallel with the X-axis 24. The first 430 and second 432 geometric axes may thus be perpendicular to each other. As is also depicted in Figs. 4A and 4B, the first 420 and second 422 abutment surfaces may advantageously be non-parallel with the first surface 406, non-parallel with each other and non-parallel with a horizontal plane spanning in the direction of the X- and Y-axis of the cartesian coordinate system 28.

The first abutment surface 420 comprises a normal vector 440, i.e. a normal 440 to the first abutment surface 420. The normal vector 440 of the first abutment surface 420 will in the following be referred to as the first normal vector 440. The first normal vector 440 is defined by an X-component 442 directed in the direction of the X-axis 22 of the cartesian coordinate system 28, a Y-component 444 directed in the direction of the Y-axis 24 of the cartesian coordinate system 28, and a Z-component 446 directed in the direction of the Z-axis 24 of the cartesian coordinate system 28.

In a similar vein, the second abutment surface 422 also comprises a normal vector 442, i.e. a normal 442 to the second abutment surface 422. The normal vector 442 of the second abutment surface 422 will in the following be referred to as the second normal vector 442. The second normal vector 450 is defined by an X-component 452 directed in the direction of the X-axis 22 of the cartesian coordinate system 28, a Y-component 454 directed in the direction of the Y-axis 24 of the cartesian coordinate system 28, and a Z-component 456 directed in the direction of the Z-axis 24 of the cartesian coordinate system 28.

As can be seen in Figs. 4A and 4B, the first 440 and second 442 normal vectors are non-parallel with each other. In further detail, the X-component 442 of the first normal vector 440 is directed away from the X-component 452 of the second normal vector 450. Also, the Y-component 444 of the first normal vector 440 as well as the Y-component 454 of the second normal vector 450 are both directed away from a normal vector 407 of the first surface 406. Further, the Z-component 446 of the first normal vector 440 as well as the Z-component 456 of the second normal vector 450 are both directed upwards when the first portion 106 is connected to the frame 50 of the vehicle 10.

The above described vehicle frame support 70 and support bracket 80 form a kit of parts. Preferably, the first bracket surface of the support bracket 80 has a shape corresponding to the shape of the first abutment surface of the vehicle frame support 70, and the second bracket surface of the support bracket 80 has a shape corresponding to the shape of the second abutment surface of the vehicle frame support 70. When connecting the vehicle frame support 70 to the support bracket 80, the first bracket surface is arranged in abutment with the first abutment surface and the second bracket surface is arranged in abutment with the second abutment surface. The support bracket 80 is thus supported by the vehicle frame support 70.

As depicted in Figs. 4A - 4C, the vehicle frame support 70 may advantageously comprise a symmetrical shape in the direction of the X-axis 22. Hereby, symmetrical isolation for a suspended mass may be obtained, whereby reaction forces in the direction of the X-axis 22 may, be more or less, cancel each other out. Further, when the energy storage arrangement 100 is mounted at each side of the frame 50 as depicted in Fig. 2, the reaction forces acting on the vehicle frame support 70 in the direction of the Y-axis 24 may, more or less, also cancel each other out. A self-balancing towards a center of gravity of a suspended mass, in the direction of the Y-axis 24, may be more or less self-balancing. Moreover, movement of the support bracket 80 on the vehicle frame support 70 in the direction of the Z-axis is allowable but due to gravity, a stabilization of the suspended mass to the vehicle frame may be obtained.

### EXAMPLE LIST

Example 1. A vehicle frame support configured to support an energy storage system, the vehicle frame support comprising: a first portion comprising a first surface, the first surface comprising at least one aperture in which a fastener element is connectable to connect the first portion to a frame of a vehicle, a second portion comprising a first abutment surface extending in a first slanted plane, and a second abutment surface extending in a second slanted plane, the first and second abutment surfaces being configured to be in abutment with a support bracket of the energy storage system to support the energy storage system, the first and second abutment surfaces face away from each other relative to a first geometric axis of the vehicle frame support, and wherein the first and second abutment surfaces face away from the first surface relative to a second geometric axis of the vehicle frame support.

Example 2. The vehicle frame support of example 1, wherein the first and second abutment surfaces are non-parallel with the first surface.

Example 3. The vehicle frame support of any one of examples 1 or 2, wherein the first abutment surface is a first planar abutment surface and the second abutment surface is a second planar abutment surface.

Example 4. The vehicle frame support of any one of the preceding examples, wherein the first and second geometric axes are perpendicular to each other.

Example 5. The vehicle frame support of any one of the preceding examples, wherein the first geometric axis is parallel with the first surface.

Example 6. The vehicle frame support of any one of the preceding examples, wherein the first surface extends along an X-direction and a Z-direction of a cartesian coordinate system of the vehicle frame support, the second portion protruding at least in a Y-direction of the cartesian coordinate system.

Example 7. The vehicle frame support of example 6, wherein a normal vector of the first abutment surface is non-parallel with a normal vector of the second abutment surface.

Example 8. The vehicle frame support of any one of examples 6 or 7, wherein an X-component of the normal vector of the first abutment surface is directed away from an X-component of the normal vector of the second abutment surface.

Example 9. The vehicle frame support of any one of examples 7 or 8, wherein a Y-component of the normal vector of the first abutment surface and a Y-component of the normal vector of the second abutment surface are directed away from a normal vector of the first surface.

Example 10. The vehicle frame support of any one of examples 7-9, wherein a Z-component of the normal vector of the first abutment surface and a Z-component of the normal vector of the second abutment surface are configured to be directed upwards when the first portion is connected to a frame of a vehicle.

Example 11. The vehicle frame support of any one of the preceding examples, the second portion at least partly enclosing the first portion.

Example 12. The vehicle frame support of any one of the preceding examples, wherein the first portion is of a metal material and the second portion is of a rubber material.

Example 13. The vehicle frame support of any one of the preceding examples, wherein the second portion comprises a recess portion arranged between the first and second abutment surfaces.

Example 14. A kit of parts, comprising a vehicle frame support according to any one of the preceding examples, and a support bracket connectable to an energy storage system.

Example 15. The kit of parts of example 14, wherein the support bracket comprises a first bracket surface and a second bracket surface, wherein the first bracket surface is arranged in abutment with the first abutment surface and the second bracket surface is arranged in abutment with the second abutment surface when the support bracket is supported by the vehicle frame support.

Example 16. A vehicle comprising a frame, the frame extends along a longitudinal direction of the vehicle, the vehicle further comprises a vehicle frame support of any one of examples 1 - 13, the vehicle frame support being connected to a first frame member of the vehicle frame.

Example 17. The vehicle of example 16, wherein the frame comprises a second frame member, the first and second frame members being arranged in parallel with each other along the longitudinal direction, wherein the vehicle further comprises a vehicle frame support of any one of examples 1 - 13 connected to the second frame member.

Example 18. The vehicle of example 17, further comprising a first energy storage system supported by the frame support connected to the first frame member, and a second energy storage system supported by the frame support connected to the second frame member.

Example 19. The vehicle of example 18, wherein the first and second energy storage modules are connected to each other.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle frame support (70) configured to support an energy storage system, the vehicle frame support comprising:
- a first portion (402) comprising a first surface (406), the first surface comprising at least one aperture (408) in which a fastener element is connectable to connect the first portion (402) to a frame (50) of a vehicle,
- a second portion (404) comprising a first abutment surface (420) extending in a first slanted plane (421), and a second abutment surface (422) extending in a second slanted plane (423), the first (420) and second (422) abutment surfaces being configured to be in abutment with a support bracket (80) of the energy storage system to support the energy storage system, the first (420) and second (422) abutment surfaces face away from each other relative to a first geometric axis (430) of the vehicle frame support (70), and wherein the first (420) and second (422) abutment surfaces face away from the first surface (406) relative to a second geometric axis (432) of the vehicle frame support (70).

2. The vehicle frame support of claim 1, wherein the first (420) and second (422) abutment surfaces are non-parallel with the first surface (406).

3. The vehicle frame support of any one of the preceding claims, wherein the first (430) and second (432) geometric axes are perpendicular to each other.

4. The vehicle frame support of any one of the preceding claims, wherein the first surface extends along an X-direction (22) and a Z-direction (26) of a cartesian coordinate system (28) of the vehicle frame support (70), the second portion (404) protruding at least in a Y-direction (24) of the cartesian coordinate system.

5. The vehicle frame support of claim 4, wherein a normal vector (440) of the first abutment surface (420) is non-parallel with a normal vector (450) of the second abutment surface (422).

6. The vehicle frame support of any one of claims 4 or 5, wherein an X-component (442) of the normal vector (440) of the first abutment surface (420) is directed away from an X-component (452) of the normal vector (450) of the second abutment surface (422).

7. The vehicle frame support of any one of claims 4-6, wherein a Y-component (444) of the normal vector (440) of the first abutment surface (420) and a Y-component (454) of the normal vector (450) of the second abutment surface (422) are directed away from a normal vector (407) of the first surface (406).

8. The vehicle frame support of any one of claims 5 - 7, wherein a Z-component (446) of the normal vector (440) of the first abutment surface (420) and a Z-component (456) of the normal vector (450) of the second abutment surface (422) are configured to be directed upwards when the first portion (402) is connected to a frame (50) of a vehicle (10).

9. The vehicle frame support of any one of the preceding claims, the second portion (404) at least partly enclosing the first portion (402).

10. The vehicle frame support of any one of the preceding claims, wherein the first portion (402) is of a metal material and the second portion (404) is of a rubber material.

11. A kit of parts, comprising a vehicle frame support (70) according to any one of the preceding claims, and a support bracket (80) connectable to an energy storage system.

12. The kit of parts of claim 11, wherein the support bracket (80) comprises a first bracket surface (322) and a second bracket surface (324), wherein the first bracket surface (322) is arranged in abutment with the first abutment surface (420) and the second bracket surface (324) is arranged in abutment with the second abutment surface (422) when the support bracket (80) is supported by the vehicle frame support (70).

13. A vehicle (10) comprising a frame (50), the frame extends along a longitudinal direction (60) of the vehicle, the vehicle (10) further comprises a vehicle frame support (70) of any one of claims 1 - 10, the vehicle frame support being connected to a first frame member (52) of the vehicle frame (50).

14. The vehicle of claim 13, wherein the frame (50) comprises a second frame member (54), the first (52) and second (54) frame members being arranged in parallel with each other along the longitudinal direction (60), wherein the vehicle further comprises a vehicle frame support (70) of any one of claims 1 - 10 connected to the second frame member (54).

15. The vehicle of claim 14, further comprising a first energy storage system (101) supported by the frame support (70) connected to the first frame member (52), and a second energy storage system (103) supported by the frame support (70) connected to the second frame member (54).
